Europäisches Patentamt

European Patent Office

Office européen des brevets

(19)

(11) Veröffentlichungsnummer: **0 031 596**
**B1**

(12) **EUROPÄISCHE PATENTSCHRIFT**

(45) Veröffentlichungstag der Patentschrift:
**22.08.84**

(21) Anmeldenummer: **80108238.9**

(22) Anmeldetag: **29.12.80**

(51) Int. Cl.³: **B 60 D 1/14,** B 62 D 13/00

(54) **Vorwärtsfahrtlenkung für Anhängerfahrzeuge.**

(30) Priorität: **27.12.79 DE 2952405**

(43) Veröffentlichungstag der Anmeldung:
**08.07.81 Patentblatt 81/27**

(45) Bekanntmachung des Hinweises auf die Patenterteilung:
**22.08.84 Patentblatt 84/34**

(84) Benannte Vertragsstaaten:
**AT BE CH DE FR GB IT LI LU NL SE**

(56) Entgegenhaltungen:
**AT - B - 176 125**
**CH - A - 450 932**
**DE - A - 843 816**
**DE - A - 933 244**
**DE - C - 174 865**
**DE - U - 7 708 186**
**US - A - 3 876 240**

**Die Akte enthält technische Angaben, die nach dem Eingang der Anmeldung eingereicht wurden und die nicht in dieser Patentschrift enthalten sind.**

(73) Patentinhaber: **EMIL DOLL KG, Industriestrasse 13, D-7603 Oppenau /Baden (DE)**

(72) Erfinder: **Doll, Friedrich, Am Rebberg 1, D-7603 Oppenau (DE)**

(74) Vertreter: **Hansmann, Axel et al, Albert-Rosshaupter-Strasse 65, D-8000 München 70 (DE)**

## Beschreibung

Die Erfindung bezieht sich auf eine Vorwärtsfahrtlenkung für die insgesamt lenkbare Vorderachse von mit Vorder- und Hinterachse ausgestatteten Anhänger-Fahrzeugen mit einem starren Zugelement, welches mit seinem einen Ende über eine gelenkige Kupplung hinten an der Zugmaschine und mit seinem anderen Ende mittels Drehlagerung vorne am Anhänger angelenkt ist, wobei die Anhänger-Vorderachse eine eigene, von der Zugelement-Drehlagerung unabhängige Vorderachsdrehlagerung besitzt und für eine Lenkung der Anhänger-Vorderachse auf einen grösseren Kurvenfahrradius als demjenigen der Zugmaschinenhinterachse die Vorderachsdrehlagerung mittels zusätzlicher Lenkübertragungselemente in Abhängigkeit von der Winkelbewegung zwischen Zugmaschinenhinterseite und Anhänger-Vorderseite verstellbar ist und der Anhänger durch das Zugelement nur gezogen, aber durch die Lenkübertragungselemente gelenkt wird.

Eine Lenkung dieser Art ist aus der DE-A-174 865 bekanntgeworden, welche verschiedene Ausgestaltungsformen von Vorwärtsfahrtlenkungen für von einer Zugmaschine gezogene Anhänger-Fahrzeuge oder auch von Pferden gezogene Strassenwagen zeigt.

Der Ausgangspunkt dieser alten Entwicklung war die Erkenntnis, dass beim Fahren von Kurven mit miteinander gekuppelten Wagen, die eine lenkbare Vorderachse und eine nicht lenkbare Hinterachse aufweisen, keiner der Wagen der Spur des Vorderwagens in gleicher Krümmung folgt, sondern vielmehr der Halbmesser des Krümmungsbogens eines jeden folgenden Wagens sich verkleinert. Das brachte die Gefahr eines Überfahrens von auf der Kurveninnenseite befindlichen Gegenständen mit sich. Bei der DE-A-174 865 ist daher gemäss Fig. 3 vorgesehen, dass eine Zugdeichsel hinten an der Zugmaschine und (unabhängig von der insgesamt drehbaren Anhänger-Vorderachse) vorne an dem Anhängerfahrzeug angelenkt ist. Zur Drehung der Anhängervorderachse um ihre Vorderachsdrehlagerung für den Lenkvorgang dient dabei wiederum eine nach vorne stehende Gabel, die kulissenartig einen an der als Zugelement dienenden Deichsel vorgesehenen Zapfen umfasste. Diese Gabel und der Zapfen dienten also als ein zusätzliches Lenkübertragungselement, welches wirksam wurde, wenn die Zugmaschinenhinterseite bei Kurvenfahrt eine Winkelbewegung gegenüber der Anhängervorderseite ausführte.

Im übrigen hat man die als Zugelement dienende Deichsel bei dieser bekannten Vorrichtung sehr lang ausgeführt und der Lösung des weiteren Problems, dass bei der gegenseitigen Bewegung zwischen Zugmaschinenhinterseite und Anhängervorderseite bei geringem Abstand zwischen diesen Kollisionsgefahr gegeben ist, keine Bedeutung beigemessen. Im Anschluss an den aus der DE-A-174 865 bekanntgewordenen Stand der Technik, von dem die vorliegende Erfindung ausgeht, sind noch eine ganze Reihe weiterer Lenkungen für Anhängerfahrzeuge entwickelt worden, und es wird dazu beispielsweise auf das DE-V-77 08 186, die CH-A-450 932, die DE-A-843 816, die UA-A-3876240 und die DE-A-933 244 verwiesen. Diese Druckschriften veranschaulichen die Schwierigkeiten, welche sich einer gut arbeitsfähigen und günstig herstellbaren Vorwärtsfahrt-Lenkung für die Vorderachse von Anhänger-Fahrzeugen entgegenstellten, bei der der Kurvenfahrradius der Anhängervorderachse gegenüber demjenigen der Zugmaschinenhinterachse vergrössert sein soll.

Zu der CH-A-450 932, bei der es sich jedoch nicht um eine Vorwärtsfahrtlenkung handelt, sondern um eine Rückwärtslenkung, sei noch folgendes ausgeführt: Mit dieser Lenkung soll sichergestellt sein, dass die Vorderachse des Anhängers bei Rückwärtsfahrt zwangsläufig der Bewegung der Hinterachse des Motorwagens folgt. Das soll ein präzises Rückwärtsfahren ermöglichen.

Zu diesem Zweck ist an der Hinterseite der Zugmaschine ein Stück neben der üblichen Zugdeichselanlenkung eine Zusatzlenkstange angelenkt, die parallel zu der Längsmittellinie des Zugs nach hinten in Richtung zu dem Anhänger verläuft und über einen etwa quer verlaufenden Gelenkhebel mit einem Kettenrad verbunden ist. Dieses ist seinerseits über eine Kette mit einem mit der Vorderachs-Drehlagerung gekuppelten Kettenrad gekuppelt. Die Anordnung führt dazu, dass im Falle einer Winkelbewegung der Zugmaschinenhinterseite gegenüber der Anhängervorderseite eine genau kontrollierte Lenkbewegung auf die Vorderachse übertragen wird, und zwar durch die erwähnten zusätzlichen Lenkübertragungselemente, während die Zugdeichsel (hier als Schubdeichsel wirkend) auf den Lenkvorgang ohne Einfluss bleibt. Die erläuterte Anordnung hat aber im übrigen auch zur Folge, dass dann, wenn die Zugmaschinenhinterseite eine Winkelstellung gegenüber ihrer Ausgangslage einnimmt, die Abhängervorderachse sofort im gleichen Sinne auf den Kurvenfahrradius eingeschwenkt wird wie das Zugfahrzeug. Dieses Verhalten ist jedoch nur für kurze Rückwärtsfahrtstrecken brauchbar und trägt nicht dem Problem der Kollisionsgefahr zwischen Zugmaschinenrückseite und Anhänger-Vorderseite bei geringem Abstand derselben Rechnung.

Der Stand der Technik veranschaulicht auch, dass es seit langem gebräuchlich ist, dass es Anhängerzugelemente in Form von Gabeln und Stangen, und Vorderachsdrehlagerungen beispielsweise in Form von Kugeldrehkränzen oder Bolzenlagern auszuführen, und dass für viele Anwendungsfälle die eine wie die andere Konstruktionsart gewählt werden kann.

Der vorliegenden Erfindung liegt die Aufgabe zugrunde, bei einer Lenkung der in Rede stehenden Art Vorkehrungen zu treffen, um nicht nur den Kurvenfahrradius der Anhänger-Vorderachse gegenüber demjenigen der Zugmaschine-Hin-

terachse zu vergrössern, sondern auch eine Verlängerung der Anhänger-Ladefläche nach vorne zur Zugmaschine zu ermöglichen.

Ausgehend von einer Vorwärtsfahrtlenkung der eingangs genannten Art kennzeichnet sich eine erste Ausführungsform der Erfindung dadurch, dass als Lenkübertragungselement eine seitlich gegenüber der Zugmaschine weder schwenkbare noch verschiebbare, von der Zugmaschinenrückseite zum Anhänger verlaufende Steuerstangenanordnung vorgesehen ist, welche über einen an ihrem rückwärtigen Ende bei dem Vorderachsdrehlager vorgesehenen Gelenkpunkt und über eine Gleitführung mit der Anhänger-Vorderachse verbunden ist. Vorzugsweise ist dabei vorgesehen, dass die Steuerstangenanordnung gegabelt ist und die Gleitführung mit dem die Anhänger-Vorderachse tragenden Drehkranz zusammengebaut ist.

Eine andere Ausführungsform der vorliegenden Erfindung kennzeichnet sich ausgehend von einer Vorwärtsfahrtlenkung der eingangs als bekannt vorausgesetzten Art dadurch, dass als Lenkübertragunsgelement eine einzelne diagonale Steuerstange dient, die diagonal zu der Mittellinie des Zugelements verläuft und mit ihrem einen Ende mit einem gelenkigen Ansteuerpunkt an der Zugmaschinenrückseite und mit ihrem anderen Ende mit einem gelenkigen Ansteuerpunkt direkt an der die Vorderachse tragenden Drehlagerung angebracht ist. Bei dieser zweiten Ausführungsform liegt vorzugsweise der Ansteuerpunkt der diagonalen Steuerstange auf der Mittellinie der Anhängervorderachse und nimmt die Steuerstange einen Winkel von etwa 20° zu der Mittellinie des Zugelements ein. Der gelenkige Ansteuerpunkt der diagonalen Steuerstange liegt dabei vorzugsweise am Fahrzeugrahmenende.

Bei beiden Ausführungsformen der Erfindung kann in vorteilhafter Weise die Anordnung so getroffen werden, dass die Vorderachsendrehlagerung und die Zugelementdrehlagerung am Anhänger koaxiale Drehzentren haben.

Von besonderem Vorteil ist es auch, wenn vorgesehen ist, dass die Zugelementdrehlagerung und die Vorderachsendrehlagerung aneinander arretierbar und die Lenkübertragungselemente ausschaltbar sind.

Mit der Erfindung sind verschiedene vorteilhafte Ausführungsformen für Vorwärtsfahrtlenkungen für Anhängerfahrzeuge geschaffen worden, bei denen der Kurvenfahrradius der Anhänger-Vorderachse gegenüber demjenigen der Zugmaschinenhinterachse vergrössert ist und auch bezogen auf bekannte Anhängerlenkungen eine Verlängerung der Anhänger-Ladefläche nach vorne zur Zugmaschine hin möglich ist. Das bedeutet, dass der Zwischenraum zwischen Zugmaschine und Anhänger kleingehalten und in Anbetracht der gesetzlich gegebenen Beschränkungen der Gesamtzuglänge eine bestmögliche Ausnutzung der Zuglänge für die Ladefläche gegeben ist.

Weitere Vorteile und Merkmale der Erfindung ergeben sich aus der nachfolgenden Beschreibung von Ausführungsbeispielen. Es folgt eine Beschreibung der Erfindungen anhand von Zeichnungen.

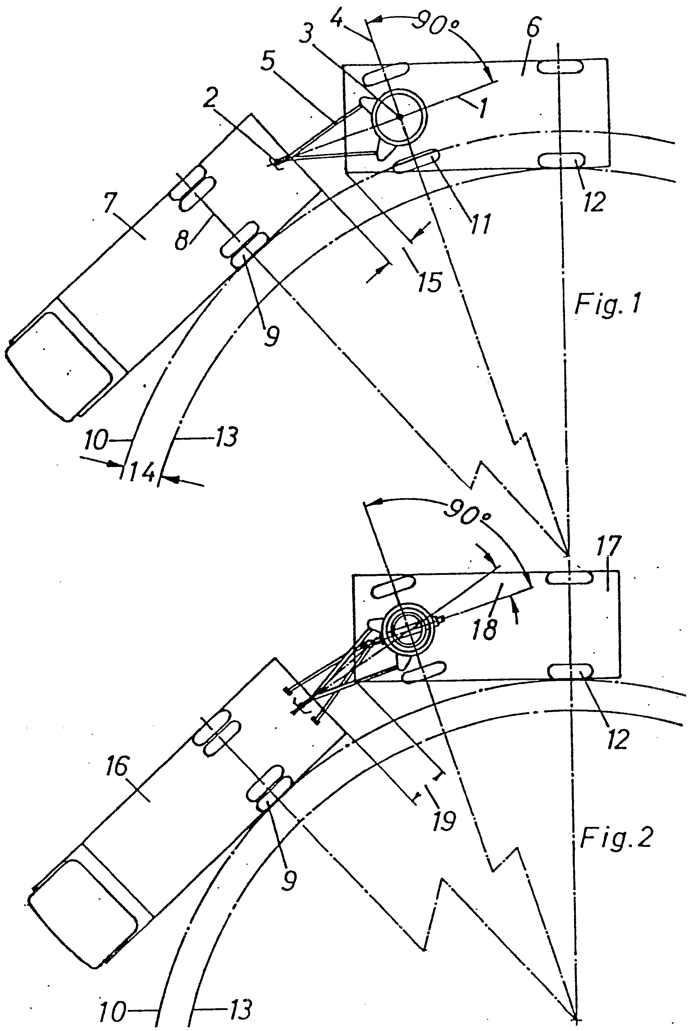

Figur 1 zeigt in Draufsicht einen kompletten Anhängerzug in bekannter Ausführung, mit einem Anhänger dessen gelenkte Vorderachse als drehkranzgelagerte Anhänger-Vorderachse ausgebildet ist, und zwar im Kurvenlauf.

Fig. 2 zeigt ebenfalls einen kompletten Anhängerzug in Draufsicht, jedoch mit der der Erfindung zugrundeliegenden Anlenkung der drehkranzgelagerten Anhänger-Vorderachse, dabei sind für Figur 1 und Figur 2 massstäblich die gleichen Anhängerzug-Abmessungen, Radstände, Zuggabel-Abmessungen und Kurvenkreise 10, 13 verwendet, so dass ein definitiver optischer Vergleich speziell der verbesserten Spurlauf- bzw. Nachlaufeigenschaften gewährleistet ist und weiterhin die Vergrösserung des Abstandes bei Kurvenfahrt von der Anhänger-Stirnseite zur Zugmaschinenaufbau-Rückseite im Vergleich von Figur 1 und Figur 2 hervorgeht.

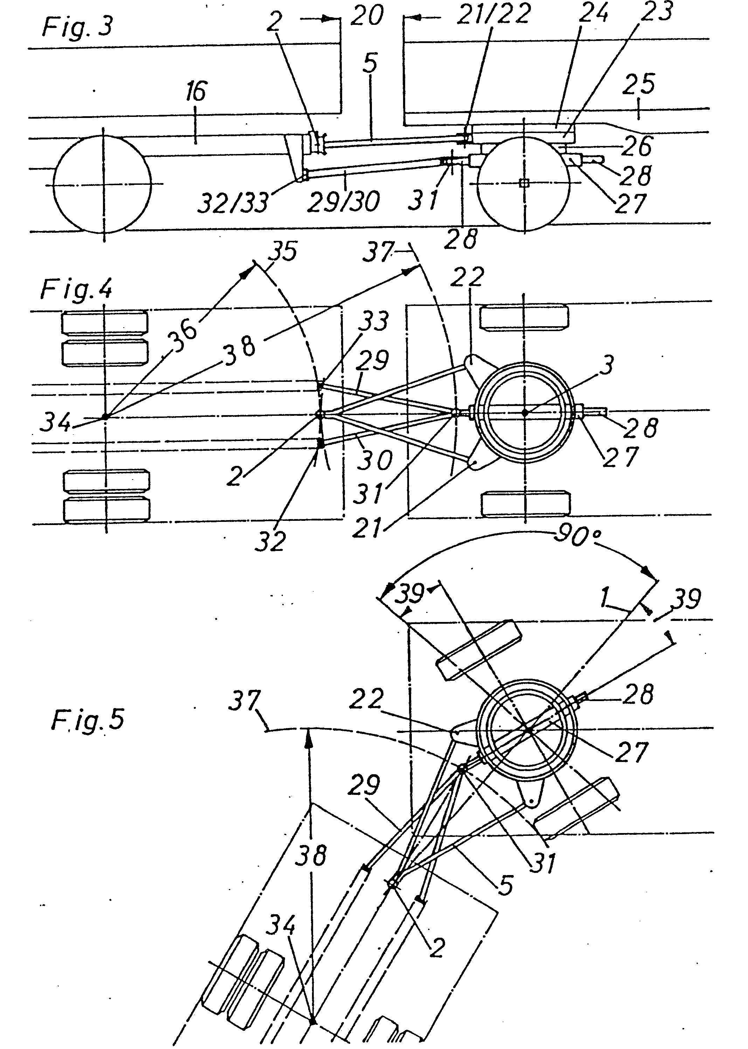

Figur 3 zeigt die Zugmaschinen-Rückseite und die Anhänger-Vorderseite sowie die erfindungsgemässe Verbindung der Zugmaschine mit dem Anhänger in Seitenansicht und im gestreckten Zug-Zustand, wobei das Abstandsmass 20 zwischen Zugmaschinen-Aufbau und Anhänger-Aufbau auf das durch die Erfindung mögliche Kleinstmass reduziert ist.

Figur 4 zeigt die Seitenansicht aus Figur 3 in Draufsicht, d.h. den Anhänger ebenfalls im gestreckten Zustand zur Zugmaschine.

Figur 5 zeigt massstäblich, mit Figur 3 und Figur 4 vergleichbar, den Anhängerzug-Ausschnitt in Draufsicht, jedoch in fast maximal eingeknicktem Zustand, d.h. bei extremer Kurvenfahrt, wobei erläuternd hinzugefügt sei, dass in diesem Fall der aus Figur 1 und 2 ersichtliche Kurvenradius kleiner gewählt wurde, um die Bewegung der linken Anhänger-Aufbauvorderkante gegenüber der Rückseite des Zugmaschinenaufbaus besser verdeutlichen zu können.

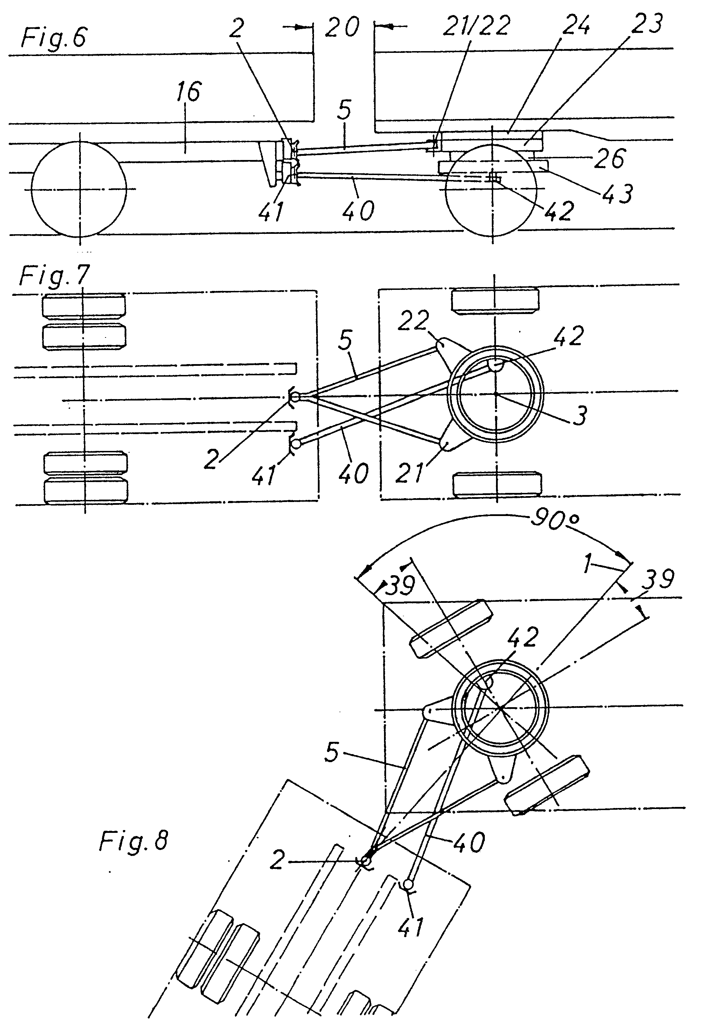

Figur 6 zeigt ähnlich wie in Figur 3 die Anhängervorderseite sowie das Ende der Zugmaschine in Seitenansicht mit der gleichen unveränderten Zuggabel 5, jedoch mit einer anderen Ansteuerung der Lenkung, die aus Figur 7 im einzelnen besser ersichtlich ist.

Figur 7 zeigt, ähnlich wie in Figur 4, die Seitenansicht von Figur 6 in Draufsicht. Insbesondere aus dieser Ansicht ist deutlich zu ersehen, dass gemäss der Alternativausführung die Steuerstangen 29 und 30 (siehe Figur 4) durch eine einzelne Steuerstange 40 ersetzt sind.

Figur 8 zeigt, ähnlich wie in Figur 5, massstäblich vergleichbar mit Figur 6 und Figur 7 den Anhängerzug-Ausschnitt in Draufsicht, jedoch in fast maximal eingeknicktem Zustand, d.h. bei extrem enger Kurvenfahrt. Die Kurvenradien sind kleiner gewählt als die Kurvenkreise 10 und 13 aus Figur 2, um die Bewegung der linken Anhänger-Aufbauvorderkante gegenüber der Rückseite des Zugmaschinenaufbaues besser sichtbar machen zu können.

Aus Figur 1, welche lediglich Stand der Technik veranschaulicht, um davon ausgehend das Wesen der Erfindung hervorkehren zu können, ist die übliche und am meisten verbreitete Anhängerlenkung mit der bekannten Zuggabelverbindung zur Zugmaschine (LKW) zu ersehen. Bei dieser Anhänger-Anlenkung bildet die Zuggabelmittellinie 1, d.h. die Verbindungslinie von der LKW-Kupplung 2 zum Drehkranzmittelpunkt der Anhänger-Vorderachse 3 einen 90°-Winkel zur Vorderachsenmittellinie 4. Die Zuggabel 5 ist mit der Anhänger-Lenkachse so verbunden, dass sich der Winkel von 90° nicht verändern kann und in jeder Längsstellung erhalten bleibt. Die Zuggabel 5 verbindet zugleich in bekannter Form den Anhänger 6 mit der Zugmaschine 7.

Die Zugmaschinenhinterachse 8 bewegt sich mit ihrem inneren Reifen 9 bei Kurvenfahrt tangential am äusseren Kurvenkreis 10, die drehkranzgelagerte Anhänger-Vorderachse mit ihrem inneren Reifen 11 annähernd auf dem Kurvenkreis 10. Durch den bei diesem Anhänger-Lenkeinschlag hervorgerufenen Anhänger-Hinterachsennachlauf bewegt sich das linke innere Hinterachsrad 12 der Anhänger-Hinterachse auf einem kleineren Kurvenkreis 13, der einen Abstand 14 zum äusseren Kurvenkreis 10 hat. In Fahrtrichtung gesehen bildet die linke hintere Aufbaukante des Zugmaschinenaufbaus und die linke vordere Kante des Anhänger-Aufbaus einen Abstand 15 zueinander. Die Lenkung des Anhängers 6 wird von der Zuggabel 5 direkt auf die Anhängervorderachse übertragen, d.h. der Winkeleinschlag der Zuggabel 5 ist gleich dem Winkeleinschlag der drehkranzgelagerten Anhänger-Vorderachse und daraus ergibt sich zwangsläufig der Nachlauf des Anhängers 6 mit einem nach innen spurenden linken Hinterachsrad 12. Die bis jetzt gemäss Figur 1 beschriebene Anhängerlenkung und der sich daraus ergebende Anhänger-Nachlauf bezieht sich auf die bekannte Ausführung bezogen auf drehschemelgelenkte Anhänger-Vorderachsen.

Figur 2 zeigt ebenfalls eine Zugmaschine 16 mit Anhänger 17, mit der Erfindung zugrundeliegenden Lenkungsausführung bezogen auf die drehkranzgelagerte Anhänger-Vorderachse. Dabei sind die Abmessungen der Zugmaschine und des Anhängers sowie deren Radstände und die Zuggabel-Länge identisch, d.h. massstäblich gleich mit der Ausführung gemäss Figur 1. Das gleiche gilt im Vergleich von Figur 1 und Figur 2 bezogen auf den Kurvenkreis 10 und 13.

Durch die nicht mehr über die Zuggabel direkt angesteuerte drehschemelgelagerte Anhänger-Vorderachse kann sich, hervorgerufen durch separate Lenkübertragungselemente, die drehschemelgelagerte Anhänger-Vorderachse weiter nach aussen vom Kurvenkreis 10 bewegen, da die ursprünglich vorhandenen 90° um den Winkel 18 reduziert sind. Das innere linke Hinterrad 12 des Anhängers 17 tangiert im Spurlauf nicht mehr am inneren Kurvenkreis 13, sondern nur noch am äusseren Kurvenkreis 10 und es läuft somit günstiger weiter aussen, und zwar genau auf dem gleichen Kurvenkreis 10 wie der linke innere Reifen 9 der Zugmaschinen-Hinterachse.

Ergänzt wird dieser erfindungsgemässe Vorteil noch dahingehend, dass sich, durch den besseren Nachlaufeffekt des Anhängers, der Abstand 19 zwischen der linken hinteren Zugmaschinenaufbaukante und der linken vorderen Kante des Anhängeraufbaues vergrössert. Dadurch ist es z.B. möglich, den Anhängeraufbau nach vorne entsprechend der Abstandsvergrösserung zu verlängern, ohne die Gesamtzuglänge im gestreckten Zustand zu vergrössern.

Dieser gemäss Figur 1 und 2 vorgezogene Vergleich soll die nachstehend im Detail beschriebene Erfindung bezogen auf den technischen und praktischen Fortschritt begründen.

In Ergänzung zu Figur 1 und 2 wird nachfolgend die Erfindung und deren Wirkungsweise im einzelnen beschrieben.

Aus der Seitenansicht der Figur 3 ist die Anhänger-Verbindung mit der Zugmaschine zu ersehen. Der Zugmaschinenaufbau hat zum Anhängeraufbau einen durch die Erfindung ermöglichten Mindestabstand 20 wie gezeichnet beim gestreckten Zug. Die Zuggabel 5 ist einerseits in der üblichen Art über die Kupplung 2 mit der Zugmaschine 16 und mit ihren beiden anderen Enden 21 und 22 über das obere Drehgestell 23 und über den oberen Kugeldrehkranz 24 mit dem Anhänger 25 andererseits verbunden. Erläuternd sei an dieser Stelle hinzugefügt, dass der Anhänger 25 wegen dem verlängert gezeichneten Aufbau eine neue Nummer im Gegensatz zu der Anhängerbezeichnung 6 bzw. 17 aus Figur 1 und Figur 2 erhalten hat. Die Zuggabel ist erfindungsgemäss nur als Zug- oder Schubverbindungselement und nicht als Lenkelement anzusehen, da sie bei Kurvenfahrt keine Lenkbewegung der drehkranzgelagerten Anhänger-Vorderachse auslöst. Dies wird klar mit dem Hinweis herausgestellt, dass sich unter dem oberen Drehgestell 23 ein unterer zweiter Kugellenkkranz 26 befindet, der mit einem Führungsrohr 27 gekoppelt ist, wobei dieses Führungsrohr 27 drehgestell-ähnlich fest mit der Anhänger-Lenkachse verbunden ist. In diesem Führungsrohr 27 befindet sich ein längsverschiebbares Gleitrohr 28. Dieses Gleitrohr ist am Punkt 31 gelenkig mit den beiden Steuerstangen 29 und 30 gelagert, wobei die beiden Steuerstangen mit dem Ende der Zugmaschine an den Punkten 32 und 33 verbunden sind und demzufolge mit der Zugmaschine eine feste Einheit bis zum Punkt 31 bilden.

Schwenkt nun das Zugmaschinenende (Fahrzeugrahmenüberhang) bei Kurvenfahrt nach aussen um den Hinterachsmittelpunkt 34, so bewegt sich auch die Kupplung auf dem Kreisbogen 35 um den Radius 36 nach aussen. Da die beiden Steuerstangen 29 und 30 mit dem Rahmenüberhang bzw. Zugmaschinenende an den Punkten 32 und 33 fest verbunden sind, bewegt sich auch der Punkt 31, der gleichzeitig eine gelenkige Verbindung mit dem Gleitrohr 28 besitzt, auf einem Kreisbogen 37 um den Hinterachsmittelpunkt 34 um einen Radius 38 nach aussen (siehe Figur 5). Der Punkt 31 wandert aus der Zuggabelmittellinie 1 und nimmt das Gleitrohr 28 mit. Da das Gleitrohr 28 im Führungsrohr 27 zwar nicht in Längsrichtung, aber seitlich geführt ist, wird auch das mit der Achse verbundene Führungsrohr 27 ausgeschwenkt und schwenkt zwangsläufig, da es mit der Lenkachse wiederum verbunden ist, auch die Lenkachse aus, wodurch eine Achsdrehbewegung (Lenkbewegung) ausgelöst wird, wobei der untere Kugeldrehkranz 26 diese Lenkachsbewegung übernimmt. Die Zuggabel 5 hätte, wie aus Figur 5 klar zu ersehen ist, bei direkter Verbindung mit der Anhängervorderachse diese weiter eingeschlagen. Da jedoch die Anhänger-Vorderachse nur durch die reduzierte Kreisbewegung vom Punkt 31 angelenkt wird, ergibt sich eine Reduzierung des Einschlagwinkels um den Winkel 39, d.h. der bei üblichen drehkranzgelenkten Anhänger-Vorderachsen konstante 90°-Winkel zwischen Zuggabelmittellinie 1 und der Lenkachsenmittellinie, wird um den Winkel 39 reduziert und der Anhänger läuft, hervorgerufen durch den reduzierten Lenkausschlag, weiter nach aussen (siehe Figur 2).

Die gemäss den Zeichnungen nach Figur 2 bis 5 dargestellten Lenkelemente stellen nur eine praxisnahe Ausführungsart von Lenkelementen dar, die auch durch andere Anordnungen ersetzt werden könnten.

Eine erfindungsgemässe Alternative der bis jetzt im wesentlichen beschriebenen Ausführungsart ist aus den Figuren 6, 7 und 8 ersichtlich. Bei dieser dem Erfindungsgedanken zugeordneten Alternativmöglichkeit entfallen das Führungsrohr 27, das längsverschiebbare Gleitrohr 28 sowie die Steuerstangen 29 und 30 (siehe Figur 4). D.h. die Ansteuerung der Anhängervorderachse 3 erfolgt direkt über die einzelne Steuerstange 40, und zwar einerseits ausgelöst bei Kurvenfahrt durch den aussermittigen Ansteuerpunkt 41 am Zugmaschinenende und andererseits durch den Ansteuerpunkt 42 am einen unteren Drehkranzteil 43. Erläuternd sei hinzugefügt, dass bei der Alternativlösung die beiden Kugeldrehkränze 24 und 26 erhalten bleiben, jedoch das Führungsrohr 27 sowie das Gleitrohr 28 durch ein Angreifen der Diagonalstange 40 am unteren Drehkranzteil 43 ersetzt sind. (Vgl. Figur 3, 4 und 5 mit Figur 6, 7 und 8.)

Der untere Drehkranzteil 43 ist mit der Anhängervorderachse 3 direkt fest oder üblicherweise über Federn indirekt fest verbunden.

Wichtig im Zusammenhang mit dem Erfindungsgedanken ist, dass die einzelne Steuerstange 40 die Zuggabelmittellinie 1 diagonal überdeckt, bzw. unterläuft.

Beim gezeigten Ausführungsbeispiel liegt der Ansteuerpunkt 42 der Steuerstange 40 auf der Vorderachsmittellinie und nimmt die Steuerstange einen Winkel von ca. 20° gegenüber der von ihr diagonal gekreuzten Zuggabelmittellinie ein.

Durch die aussermittige Ansteuerung einerseits am Fahrzeugrahmenende im Ansteuerpunkt 41 und im Ansteuerpunkt 42 des Drehgestelles der Anhängervorderachse 3 wird, ähnlich wie bei der Gleit- und Führungsrohrausführung, gemäss Figur 3, 4 und 5, der Einschlagwinkel der Anhängervorderachse im Verhältnis zur Zuggabelwinkelbewegung reduziert. D.h. die Anhänger-Vorderachse bildet zur Zuggabel-Mittellinie 1 bei Lenkeinschlag keinen üblichen Winkel 90° zur Zuggabel. Die nur noch von der Steuerstange ausgelöste Lenkung der Anhänger-Vorderachse reduziert, je nach Wahl der Ansteuerpunkte 41 und 42 und deren Aussermittenabstand, diesen 90°-Winkel um den Winkel 39 (siehe fig. 8). D.h. der Anhänger fährt zwangsläufig durch den reduzierten 90°-Winkel weiter nach aussen und erreicht auch mit dieser erfindungsgemässen Lösung den gleichen Kurvennachlaufeffekt wie in Figur 2 ersichtlich.

Wesentlich ist der erfindungsgemässe Gedanke, dass nicht nur die Zuggabel 5 als solche nicht mehr direkt zum Auslösen des Lenkvorganges herangezogen wird sondern auch beim eigentlichen Lenkvorgang durch aussermittige Lagerung der Ansteuerpunkte für die Lenkelemente einerseits am Zugmaschinenende und andererseits am Anhänger, je nach Verschieben dieser aussermittigen Lagerpunkte, eine grössere oder kleinere Winkelkorrektur des Achseinschlages an der Anhängerlenkachse gegenüber der Zuggabel erreicht wird.

Durch diese Art von Anhängerlenkung bewegt sich bei Kurvenfahrt der Anhänger hinter der Zugmaschine günstiger als bei normalüblicher Zuggabellenkung, was deutlich aus Figur 1 und Figur 2 bezogen auf den Abstand 15 unc 19 ersichtlich ist und dies bedeutet, gemäss Figur 3 und Figur 5, dass z.B. der Abstand zwischen Anhängeraufbau und Zugmaschinenaufbau kleiner als bis jetzt üblich gewählt werden kann. Da, gemäss Gesetz, bei gestreckten, d.h. geradeaus gerichteten Anhängerzug-Einheiten die Gesamtzuglänge begrenzt ist, ergibt sich ohne Überschreitung der Gesamtzuglänge im Zusammenhang mit der Erfindung eine längere Ladefläche der Zugeinheit.

## Patentansprüche

1. Vorwärtsfahrtlenkung für die insgesamt lenkbare Vorderachse (3) von mit Vorder- und Hinterachse ausgestatteten Anhängerfahrzeugen (6) mit einem starren Zugelement (5), welches mit seinem einen Ende über eine gelenkige Kupplung (2) hinten an der Zugmaschine (16) und mit seinem anderen Ende mittels Drehlagerung (23, 24) vorne am Anhänger angelenkt ist, wobei die Anhänger-Vorderachse (3) eine eigene, von der Zugelementdrehlagerung (23, 24) unabhängige Vorderachsdrehlagerung (26) besitzt und für eine Lenkung der Anhänger-Vorderachse auf einem grösseren Kurvenfahrradius (10) als demjenigen der Zugmaschinenhinterachse die Vorderachsdrehlagerung mittels zusätzlicher Lenkübertragungselemente (27–33) in Abhängigkeit von

der Winkelbewegung zwischen Zugmaschinenhinterseite und Anhänger-Vorderseite verstellbar ist und der Anhänger durch das Zugelement (5) nur gezogen, aber durch die Lenkübertragungselemente (27–33) gelenkt wird, dadurch gekennzeichnet, dass als Lenkübertragungselement eine seitlich gegenüber der Zugmaschine weder verschwenkbare noch verschiebbare, von der Zug-maschinenrückseite zum Anhänger (17) verlau-fende Steuerstangenanordnung (29, 30) vorgese-hen ist, welche über einen an ihrem rückwärtigen Ende bei dem Vorderachsdrehlager (26) vorgesehenen Gelenkpunkt (31) und über eine Gleitführung (27, 28) mit der Anhänger-Vorderachse (3) verbunden ist.

2. Lenkung nach Anspruch 1 dadurch gekennzeichnet, dass die Steuerstangenanordnung (29, 30) gegabelt ist und die Gleitführung (27, 28), mit dem die Anhänger-Vorderachse (3) tragenden Drehkranz (26) zusammengebaut ist.

3. Vorwärtsfahrtlenkung für die insgesamt lenkbare Vorderachse (3) von mit Vorder- und Hinterachse ausgestatteten Anhängerfahrzeugen (6) mit einem starren Zugelement (5), welches mit seinem einen Ende über eine gelenkige Kupplung (27) hinten an der Zugmaschine (16) und mit seinem anderen Ende, mittels Drehlagerung (23, 24) vorne am Anhänger angelenkt ist, wobei die Anhänger-Vorderachse (3) eine eigene, von der Zugelementdrehlagerung (23, 24) unabhängige Vorderachsdrehlagerung (26) besitzt, und für eine Lenkung der Anhänger-Vorderachse auf einem grösseren Kurvenfahrradius (10) als demjenigen der Zugmaschinenhinterachse die Vorderachsdrehlagerung mittels zusätzlicher Lenkübertragungselemente (27–33) in Abhängigkeit von der Winkelbewegung zwischen Zugmaschinenhinterseite und Anhänger-Vorderseite verstellbar ist und der Anhänger durch das Zugelement (5) nur gezogen,aber durch die Lenkübertragungselemente (27–33) gelenkt wird, dadurch gekennzeichnet, dass als Lenkübertragungselement eine einzelne diagonale Steuerstange (40) dient, die diagonal zu der Mittellinie des Zugelements (5) verläuft und mit ihrem einen Ende mit einem gelenkigen Ansteuerpunkt (41) an der Zugmaschinenrückseite und mit ihrem anderen Ende mit einem gelenkigen Ansteuerpunkt (42) direkt an der die Vorderachse tragenden Drehlagerung (43) angebracht ist.

4. Lenkung nach Anspruch 3, dadurch gekennzeichnet, dass der Ansteuerpunkt (42) der diagonalen Steuerstange (40) auf der Mittellinie der Anhänger-Vorderachse (3) liegt und die Steuerstange (40) einen Winkel von etwa 20° zu der Mittellinie des Zugelements (5) einnimmt.

5. Lenkung nach Anspruch 4, dadurch gekennzeichnet, dass der gelenkige Ansteuerpunkt (41) der diagonalen Steuerstange (440) am Fahrzeugrahmenende liegt.

6. Lenkung nach Ansprüchen 1, 2, 3, 4 oder 5, dadurch gekennzeichnet, dass die Vorderach-sendrehlagerung (26) und die Zugelementdrehla-gerung (24) am Anhänger koaxiale Drehzentren haben.

7. Lenkung nach Anspruch 5, dadurch gekennzeichnet, dass die Zugelementdrehlagerung (24) und die Vorderachsendrehlagerung (26) aneinan-der arretierbar und die Lenkübertragungsele-mente (27–33) ausschaltbar sind.

**Revendications**

1. Direction avant pour l'essieu avant (3), intégralement braquable, de remorques (6) équipées d'essieux avant et arrière, comportant un élément rigide de traction (5) qui est articulé par l'une de ses extrémités à l'arrière du véhicule tracteur (16) par l'intermédiaire d'un accouplement articulé (2) et, par son autre extrémité, à l'avant de la remorque par l'intermédiaire d'un dispositif de montage rotatif (23, 24), l'essieu avant (3) de la remorque possédant son propre dispositif de montage rotatif (26) indépendant du dispositif de montage rotatif (23, 24) de l'élément de traction, le dispositif de montage rotatif de l'essieu avant étant réglable en fonction du mouvement angulaire entre le côté postérieur du véhicule tracteur et le côté antérieur de la remorque, au moyen d'éléments supplémentaires (27–33) transmetteurs de braquage, en vue d'un braquage de l'essieu avant de la remorque d'un rayon de virage (10) plus grand que celui de l'essieu arrière du véhicule tracteur, et la remorque étant seulement tractée par l'élément de traction (5), mais braquée par les éléments (27–33) transmetteurs de braquage, caractérisée par le fait qu'il est prévu comme élément transmetteur de braquage un dispositif à tiges de commande (29, 30) qui, ne pouvant ni pivoter ni coulisser latéralement par rapport audit véhicule tracteur et s'étendant du côté postérieur de ce véhicule tracteur jusqu'à la remorque (17), est relié à l'essieu avant (3) de cette remorque par l'intermédiaire d'un point d'articulation (31) prévu sur le palier de rotation (26) à son extrémité postérieure, ainsi que par l'intermédiaire d'un dispositif de guidage coulissant (27, 28).

2. Direction selon la revendication 1, caractérisée par le fait que le dispositif à tiges de commande (29, 30) est fourchu et le dispositif de guidage coulissant (27, 28) est assemblé d'un seul tenant avec la couronne rotative (26) supportant l'essieu avant (3) de la remorque.

3. Direction avant pour l'essieu avant (3), intégralement braquable, de remorques (6) équipées d'essieux avant et arrière, comportant un élément rigide de traction (5) qui est articulé par l'une de ses extrémités à l'arrière du véhicule tracteur (16) par l'intermédiaire d'un accouplement articulé (2) et, par son autre extrémité, à l'avant de la remorque par l'intermédiaire d'un dispositif de montage rotatif (23, 24), l'essieu avant (3) de la remorque possédant son propre dispositif de montage rotatif (26) indépendant du dispositif de montage rotatif (23, 24) de l'élément de traction, le dispositif de montage rotatif de l'essieu avant étant réglable en fonction du mouvement angulaire entre le côté postérieur du véhicule tracteur et le côté antérieur de la remorque, au moyen d'éléments supplémentaires (27–33) transmetteurs de braquage, en vue d'un braquage de l'essieu avant de la remorque d'un rayon de virage (10) plus grand que celui de l'essieu arrière du véhicule tracteur, et la remorque étant seulement tractée par l'élément de traction (5), mais braquée par les éléments (27–33) transmetteurs de braquage, caractérisée par le fait que, comme élément transmetteur de braquage, il est prévu une seule et unique tige diagonale de commande (40) qui s'étend en diagonale par rapport - l'axe médian de l'élément de traction (5) et est montée, par l'une de ses extrémités, sur le côté postérieur du véhicule tracteur grâce à un point de commande articulé (41) et, par son autre extrémité, directement sur le dispositif de montage rotatif (43) supportant l'essieu avant, grâce à un point de commande artiuclé (42).

4. Direction selon la revendication 3, caractérisée par le fait que le point de commande articulé (42) de la tige diagonale de commande (40) se trouve sur l'axe médian de l'essieu avant (3) de la remorque et ladite tige de commande (40) forme un angle d'environ 20° par rapport à l'axe médian de l'élément de traction (5).

5. Direction selon la revendication 4, caractérisée par le fait que le point de commande articulé (41) de la tige diagonale de commande (40) est situé à l'extrémité du châssis du véhicule.

6. Direction selon les revendications 1, 2, 3, 4 ou 5, caractérisée par le fait que le dispositif de montage rotatif (26) de l'essieu avant et le dispositif de montage rotatif (24) de l'élément de traction présentent des axes de rotation coïncident sur la remorque.

7. Direction selon la revendication 5, caractérisée par le fait que le dispositif de montage rotatif (24) de l'élément de traction et le dispositif de montage rotatif (26) de l'essieu avant peuvent être bloqués l'un contre l'autre, et les éléments (27–33) transmetteurs de braquage peuvent être mis hors prise.

## Claims

1. Forward steering gear for the unitary steerable front axle (3) of trailer vehicles (6) equipped with front and rear axles and having a rigid draw bar (5) which is pivoted at one of its ends on a pivoting coupling (2) at the rear of the towing machine (16) and is pivoted at its other end by means of a rotatable bearing (23, 24) at the front of the trailer, in which the trailer front axle (3) has its own front axle rotatable bearing (26) independent of the draw bar rotatable bearing (23, 24) and, for steering the trailer front axle on a larger radius (10) of curved movement than that of the towing machine rear axle, the front axle rotatable bearing is adjustable by means of additional steering transfer elements (27–33) in dependence on the angular movement between the rear end of the towing machine and the front end of the trailer, the trailer being pulled only by the draw bar (5), but being pivoted by the steering transfer elements (27–33), characterised in that, as the steering transfer element, a tiller strut arrangement (29, 30) is provided which extends neither laterally swingable nor laterally movable with respect to the towing machine from the rear end of the towing machine to the trailer (17), and which is connected by means of a pivot point (31) provided on its rear end with the front axle rotatable bearing (26) and by means of a sliding guide (27, 28) with the trailer front axle (3).

2. Steering gear according to claim 1, characterised in that the tiller strut arrangement (29, 30) is forked and the sliding guide (27, 28) is formed as a unit with the rotatable bearing (26) carried by the trailer front axle (3).

3. Forward steering gear for the unitary steerable front axle (3) of trailer vehicles (6) equipped with front and rear axles and having a rigid draw bar (5) which is pivoted at one of its ends on a pivoting coupling (2) at the rear of the towing machine (16) and is pivoted at its other end by means of a rotatable bearing (23, 24) at the front of the trailer, in which the trailer front axle (3) has a single front axle rotatable bearing (26) independent of the draw bar rotatable bearing (23, 24) and, for steering the trailer front axle on a larger radius (10) of curved movement than that of the towing machine rear axle, the front axle rotatable bearing is adjustable by means of additional steering transfer elements (27–33) in dependence on the angular movement between the rear end of the towing machine and the front end of the trailer, the trailer being pulled only by the draw bar (5), but being pivoted by the steering transfer elements (27–33), characterised in that a single diagonal steering strut (40) serves as a steering transfer element, which strut runs diagonally to the centre line of the draw bar (5) and is fixed at one of its ends to a pivotable steering point (41) on the rear end of the towing machine and at its other end to a pivotable steering point (42) directly on the rotatable bearing (43) carried on the front axle.

4. Steering gear according to claim 3, characterised in that the steering point (42) of the diagonal steering strut (40) lies on the centre line of the trailer front axle (3) and the steering strut (40) makes an angle of about 20° with the centre line of the draw bar (5).

5. Steering gear according to claim 4, characterised in that the pivotable steering point (41) of the diagonal steering stur (42) lies on the towing machine chassis.

6. Steering gear according to claim 1, 2, 3, 4 or 5, characterised in that the front axle rotatable bearing (26) and the draw bar rotatable bearing (24) have coaxial centres of rotation on the trailer.

7. Steering gear according to claim 5, characterised in that the draw bar rotatable bearing (24) and the front axle rotatable bearing (26) can be locked together and the steering transfer elements (27–33) are disconnectable.

Fig.1

Fig.2

0 031 596

Fig. 3

Fig. 4

Fig. 5

11

0 031 596

Fig.6

Fig.7

90°

Fig.8

13